# EUROPEAN PATENT SPECIFICATION

(11) **EP 1 562 396 B1**
(45) Date of publication and mention of the grant of the patent: **18.09.2013**
(21) Application number: 05250372.9
(22) Date of filing: 25.01.2005
(51) Int. Cl.: H04W 36/00, H04W 88/06

(54) **Handover in a mobile telecommunications system between GSM and UMTS radio coverage zones**
Handover in einem Mobiltelekommunikationssystem zwischen Gebieten mit GSM- und UMTS-Funkbedeckung
Transfert d'appel dans un système de communication mobile entre des zones de couverture GSM et UMTS

(30) Priority: 04.02.2004 GB 0402503
(43) Date of publication of application: 10.08.2005
(73) Proprietor: Vodafone Group PLC, Newbury Berkshire RG14 2FN (GB)
(72) Inventor: Fox, Dave, Reading, RG30 2RB (GB); Pudney, Christopher David, Newbury Berkshire, RG20 9EZ (GB)
(74) Representative: Harries, Simon George

(56) References cited:
- EP-A- 1 282 324
- WO-A-03/021854
- US-A1- 2002 035 682
- NOKIA: ""Packet Switched Handover for GERAN A/Gb mode; Stage 2; (Release 6) V0.1.0" 3GPP TSG GERAN #17BIS, TDOC G2-040082, [Online] 12 January 2004 (2004-01-12), pages 1-43, XP002376169 Retrieved from the Internet: URL:http://www.3gpp.org/ftp/tsg_geran/Wg2_ Protocol_Aspects/GERAN2_17bis_Edinburgh/Do cs/> [retrieved on 2006-04-07]
- VODAFONE: "Introduction of the UTRAN CCO IE in the CREATE_BSS_PFC PDU" 3GPP TSG-GERAN #4, TDOC GP-010898, [Online] 2 April 2001 (2001-04-02), pages 1-3, XP002376170 Retrieved from the Internet: URL:http://www.3gpp.org/ftp/tsg_geran/TSG_ GERAN/GERAN_04_Biarritz/Docs/> [retrieved on 2006-04-07]

## Description

The present invention relates to a method of and apparatus for controlling handover of a mobile terminal in a mobile telecommunications network from GSM radio coverage to UMTS radio coverage.

NOKIA: ""Packet Switched Handover for GERAN A/Gb mode; Stage 2; (Release 6) V0.1.0" 3GPP TSG GERAN #17BIS, TDOC G2-040082, [Online] 12 January 2004 (2004-01-12), pages 1-43, XP002376169, discloses a packet switched handover procedure from GSM radio coverage to UMTS radio coverage. A packet switched handover command is transmitted between the SGSN and a source BSS.

WO-A-03/021854 discloses a system for maintaining a parameter, such as quality of service (QoS), in a communication link in a wireless network that may provide GSM radio coverage or UMTS radio coverage. A packet control unit controls how the radio resources allocated between various mobile terminals.

According to a first aspect of the present invention, there is provided a method of controlling handover of a mobile terminal in a mobile telecommunications network as defined in claim 1.

According to a second aspect of the present invention, there is provided apparatus for controlling handover of a mobile terminal in a mobile telecommunications network as defined in claim 15.

For a better understanding of the present invention, an embodiment will now be described by way of example, with reference to the accompanying drawings, in which:
Figure 1 shows schematically the elements of a telecommunications system and is used to explain a known circuit switched service-based handover procedure to assist in understanding the present invention;
Figure 2 shows schematically the elements of a telecommunications system and is used to explain a known packet switched service-based handover procedure to assist in understanding the present invention; and
Figure 3 shows schematically the elements of a telecommunications system for explaining a cross domain service-based handover procedure in accordance with the invention.

In the drawings like elements are generally designated with the same reference letter.

Some useful background will now be discussed.

When the UMTS radio coverage (UTRAN) was added to the GSM radio coverage (GERAN) in Release 99 of the 3GPP specifications, handover mechanisms were introduced to allow the movement of a mobile terminal (MS) between the two radio access networks. These mechanisms were designed such that the radio access network (RAN) nodes for the GERAN and UTRAN - base station controller (BSC) and radio network controller (RNC), respectively - controlled the mechanisms as they understood the current radio conditions of the MS.

A core network node controls each domain (that is, the circuit switched -CS- domain and the packet switched -PS- domain) of the radio access network: the mobile switching centre (MSC) for the circuit switched domain and the serving GPRS support node (SGSN) for the packet switched domain. It is these nodes that understand the type of service that the MS requests.

As the GERAN and UTRAN do not understand the service requests of the MS, the core network needs a mechanism to allow the core network node (i.e. MSC and SGSN) to prompt the radio access network nodes (i.e. BSC and RNC) to move the MS between the radio access networks: this is called service-based handover.

The initial idea for the service-based handover was only for the circuit switched domain, but it has been attempted to extend it to the packet switched domain. In the circuit switched domain there is a handover process where the resources are reserved in the target cell of the new RAN before the MS is instructed to move to these reserved resources. In the packet switched domain there is not a pure handover process but instead the MS is instructed to move to a cell of the new RAN where the mobile can then request resources.

A Class A MS that is Dual Transfer Mode (DTM) capable is able to simultaneously access both the circuit switched and packet switched domains in the GERAN. The packet switched activity is typically lower priority than that on the circuit switched domain, because the circuit switched domain carries real-time traffic (such as voice calls). So if it is determined in the BS to move the MS over from GERAN to UTRAN the circuit switched procedures are used, as resources are required to be reserved in the target cell.

The known service-based handover procedure can be used on the circuit switched domain whilst the MS is in DTM, but currently the MS in DTM could not be moved to UTRAN when the GERAN cannot provide the required Quality of Service (QoS) for the packet switched domain. The network operator is likely to move an MS to GERAN for circuit switched voice calls, but when the user of the MS wants to use services on the packet switched domain that require better quality of service than GERAN can support, the MS cannot be moved back to UTRAN to satisfy the service request.

Another scenario where currently there are problems is when an MS in the GERAN, which can only be active in one of the domains at a time (that is, Class B MS), is in a call in the circuit switched domain and the SGSN has downlink packet switched data to send to the MS. The SGSN would need to move the MS to UTRAN, where all MS are inherently Class A (that is, the MS can simultaneously access both the circuit switched and packet switched domains), in order to allow simultaneous communication with the MS in the packet switched and circuit switched domains.

An aspect of this invention relates to how the (circuit switched and packet switched) service-based handover/cell reselection mechanisms can be linked together to allow the packet switched domain to trigger the circuit switched domain service based handover to UTRAN procedure which is then followed by reestablishment of the packet switched domain service but now with UTRAN quality of service.

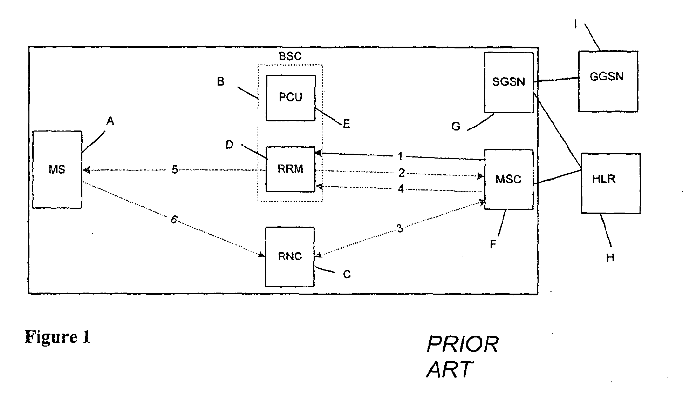

An example of the known circuit switched service based handover procedure will now be described in more detail with reference to Figure 1.

MS A communicates wirelessly with BSC B (in fact via a base transceiver station BTS, which is not shown for the sake of simplicity) when operating in GERAN, and communicates wirelessly with RNC C (in fact via a "node B", which is also not shown for the sake of simplicity) when operating in UTRAN. The BSC B comprises a radio resource management (RRM) module D, which controls communications with the MS A as the MS A moves between cells of the RAN. The BSC B further comprises packet control unit (PCU) E for supporting communication in the packet switched domain.

In the circuit switched domain MSC F provides a link between the core network and the BSC B. In the packet switched domain, the serving GPRS support node (SGSN) G in conjunction with the gateway GPRS support node (GGSN) I enable packet data to be transmitted to the BSC B and/or RNC C and provide an interface between the radio network and an IP network (not shown). Home location register (HLR) H stores subscriber information and information that allows incoming calls to be routed to the relevant mobile subscriber. The HLR is accessible by the SGSN G and the MSC F.

If an MS A is operating in GERAN and requests the establishment of a circuit switched video telephony call, the core network needs to move the mobile station from GERAN to UTRAN coverage to allow the call to proceed.

The MSC F determines that the MS A needs to be moved from GERAN to UTRAN coverage. This may be due to the GERAN not being able to provide the data rate required for the requested service. The MSC F cannot directly start the handover process; instead the MSC F has to prompt the BSC B to initiate the handover. This can be achieved by the following steps, which correspond to the numbered arrows of Figure 1:
1. The MSC F passes an ASSIGNMENT REQUEST message to the Radio Resource Management (RRM) part D of the BSC B including an indicator which prompts the BSC B where possible to handover the MS A to UTRAN coverage.
2. The BSC B gathers UTRAN neighbour cell measurements from the MS A and requests the MSC F to co-ordinate the resources reservation in the target cell.
3. The MSC F requests that resources are reserved by the RNC C for a MS A that is to be handed over to a UTRAN cell controlled by this RNC C. Once the RNC C has reserved the resources, the RNC C informs the MSC F that the resources in the target cell are ready for the MS A.
4. The MSC F lets the BSC B know that the handover can go ahead and the MS A should be instructed to move to the UTRAN cell.
5. The BSC B sends the INTER SYSTEM HANDOVER TO UTRAN COMMAND message to the MS A commanding the MS A to move to the new cell.
6. Once the MS A arrives in UTRAN coverage, the MS A establishes the circuit switched connection.

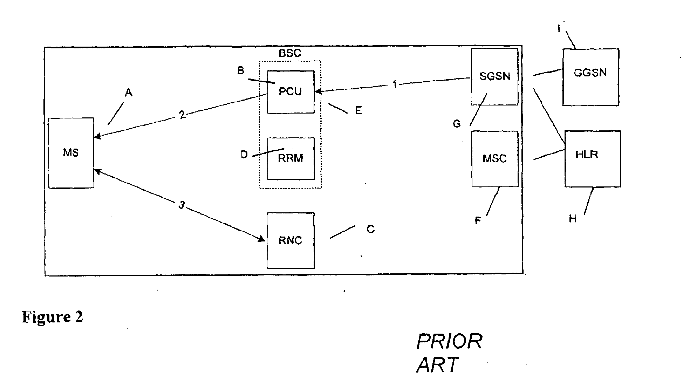

As indicated above a packet switched service-based handover procedure has also been proposed, and will now be described in more detail with reference to Figure 2.

The SGSN G may determine that the MS A needs to be moved from GERAN to UTRAN coverage. This may be due to the GERAN not being able to provide the data rate (or other quality of service attribute) required for the requested service. The SGSN G cannot directly start the cell reselection process; instead the SGSN G prompts the BSC B to initiate the controlled cell reselection. This may be achieved by the following steps, which correspond to the numbered arrows of Figure 2:
1. The SGSN 9 indicates to the Packet Control Unit (PCU) part E of the BSC B with a CREATE-BSS-PFC message a request to move this MS A to UTRAN coverage by including the Service UTRAN CCO IE with the value set to "Network initiated cell change order procedure to UTRAN should be performed". This message is acknowledged by the BSC B.
2. The BSC B instructs the MS A to move to one of the cells in the MSs neighbouring UTRAN cell list.
3. The MS A moves to UTRAN and accesses the cell and reads the system information. The MS A after completing a cell update in UTRAN can then request resources.

However, technical and practical problems have resulted in the above procedure not being widely implemented.

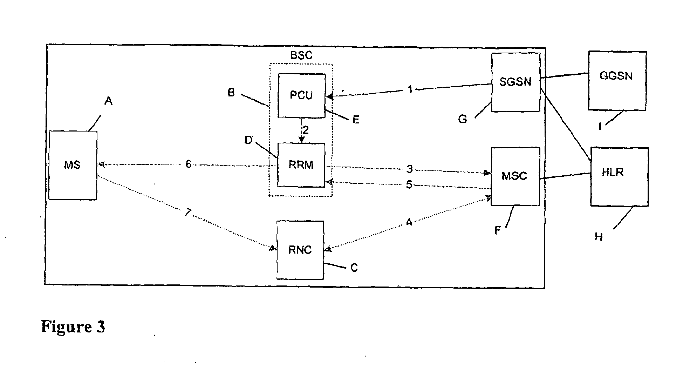

A cross domain service based handover embodiment of the invention will now be described with reference to Figure 3.

The procedure can be triggered by a number of entities in the network. Below are some examples:
- The HLR H may pass information to the SGSN G to trigger the SGSN G to move the MS A to UTRAN coverage. The indication could be included as part of the mobile management procedures between HLR H and SGSN G. For example, an indication that MS A is a "Gold"/"Silver"/"Bronze" customer (i.e. customers who have different service levels), and the Gold customers should (whenever possible) be in UTRAN coverage.
- The GGSN I could determine that the MS A should be served by UTRAN whenever possible and signal this to the SGSN G. This determination could be made locally in the GGSN I, or, could be provided to the GGSN I by an external node (for example a RADIUS server), or, it could be a linked to the access point name (APN) of the GGSN I selected by the SGSN I.
- The SGSN G could decide to trigger this move because downlink data arrives at the SGSN G from the GGSN I for the MS A and the PDP context associated with this downlink data may require higher data rates/quality of service than GERAN can provide.
- An MS A that is DTM capable may request the activation of a PDP context. This PDP context may require the MS A to be served by UTRAN to provide the required quality of service.
- The PCU E receiving a page for a Class B MS A in a circuit switched call needs UTRAN coverage to allow the data to be sent. This option is dependent on the BSC B understanding that a suspend procedure is not required, or, that the SGSN G understands that the suspend procedure can be ignored.

As can be seen in Figure 3 in the procedure, the SGSN G sends a message to PCU E. In this case it is this message that triggers the PCU E to prompt the Radio Resource Manager (RRM) function D in the BSC B to initiate the circuit switched handover to UTRAN procedure. In other cases, the PCU E may decide on its own that it wants the MS A to be in UTRAN: for example because the PCU E is not able to able to provide the data rate required for the requested service or because of functionality limitations of the MS A in GERAN (i.e. the MS A is only a class B handset).

The following steps are performed, which correspond to the numbered arrows of Figure 3:
1. The SGSN G sends a message to the PCU E in the BSC B prompting the PCU E to initiate the PCU E to request the RRM D to start the handover procedure. The following list are example situations and are not exhaustive:
   a. The SGSN G sends a CREATE-BSS-PFC message to the PCU E including the Service UTRAN CCO, and the PCU E finds the MS A is in a circuit switched call; or
   b. The BSC B receives a Page-packet switched from the SGSN G, for a Class B mobile which is currently in a circuit switched call. To allow this case to occur the BSC B may not initiate the suspend procedure for the dual mode MS A (that is an MS that can work in UTRAN as well as GERAN), or the SGSN G ignores the suspend procedure for dual mode MS A; or
   c. The SGSN G requests the BSC B to provide a quality of service not currently available/supportable in GERAN when a MS A is in a circuit switched call.
2. The PCU E requests to the RRM D that the circuit switched domain handover procedure is initiated. The implementation could allow the RRM D to treat the indication from the PCU E as though it came from the MSC F (step 1, figure 1) and therefore no additional implementation in the RRM D is required.
3. The BSC B checks from the Classmark information that the MS A is dual mode capable and then gathers/analyses UTRAN neighbour cell measurements from the MS A and requests the MSC F to co-ordinate the resources reservation in the target cell.
4. The MSC F requests that resources are reserved by the RNC C for a MS A to be handed over to a UTRAN cell controlled by this RNC C. Once the RNC C has reserved the resources, the RNC C informs the MSC F that the resources in the target cell are ready for the MS A.
5. The MSC F lets the BSC B know that the handover can go ahead and the MS A should be instructed to move to the UTRAN cell.
6. The BSC B sends the INTER SYSTEM HANDOVER TO UTRAN COMMAND message to the MS A commanding the MS A to move to the new cell and describing the resources allocated on the new cell.
7. Once the MS A arrives in UTRAN coverage, the MS A establishes the circuit switched connection and then completes a cell update in the packet switched domain allowing any downlink data to flow. If the MS A has uplink packet switched data to send the MS A may now request resources.

The mechanism described above may allow:
- Downlink data of a previously activated context to be sent to a dual mode (GSM-UMTS) mobile that is GSM-Class B MS when the MS is in voice call in GERAN.
- An MS in a circuit switched call in GERAN to be moved over to UTRAN to fulfil the quality of service for a previously activated context made for the packet switched domain.
- An MS in a circuit switched call in GERAN can request the establishment of high quality of service services whilst on a call. This removes the restriction made on the Class A mobiles by the network operator moving the MS to GERAN for voice calls.

## Claims

1. A method of controlling handover of a mobile terminal (A) in a mobile telecommunications network from GSM radio coverage to UMTS radio coverage, the method including generating a command in the packet switched domain for a packet data control unit (B) associated with a base station control unit (E) with which the mobile terminal (A) is registered which causes a radio resource manager function (D) in the base station control unit (E) to initiate handover from GSM radio coverage to UMTS radio coverage, **characterised in that** the handover initiated by the radio resource manager function (D) is a circuit switched domain handover procedure.

2. The method of claim 1, wherein the command is generated by a serving GPRS support node, SGSN.

3. The method of claim 2, wherein a home location register, HLR, of the mobile telecommunications network passes information to the SGSN to trigger the SGSN to generate the command to the packet data control unit (B).

4. The method of claim 3, wherein the HLR stores subscription data corresponding to the mobile terminal (A), and wherein the command to the packet data control unit (B) is generated in dependence upon that subscription information.

5. The method of any one of the preceding claims, wherein a gateway GPRS support node, GGSN, in the mobile telecommunications network causes generation of the command to the packet data control unit (B).

6. The method of claim 5, wherein the GGSN generates a signal for controlling the SGSN.

7. The method of any one of the preceding claims, wherein the command to the packet data control unit (B) is generated in response to downlink packet data being received for transmission to the mobile terminal (A).

8. The method of claim 7, wherein the downlink data has a PDP context associated therewith, and wherein the method includes analysing the PDP context to determine the communication speed and/or quality required by the PDP context and selectively generating the command to the packet data control unit (B) in dependence thereon.

9. The method of any one of the preceding claims, wherein the mobile terminal (A) requests activation of a PDP context, and wherein this PDP context is analysed and the command to the packet data control unit is selectively generated in dependence upon that analysis.

10. The method of any one of the preceding claims, wherein the packet control data unit (B) detects a request for data to be sent to the mobile terminal (A) in the packet switched domain, determines whether the mobile terminal (A) is already operative in the circuit switched domain, and selectively generates the command in dependence thereon.

11. The method of any one of the preceding claims, wherein the radio resource manager function (D) instructs a mobile switching centre, MSC, to control reservation of resources in a target UMTS cell.

12. The method of claim 11, wherein the MSC instructs a radio network controller, RNC, to reserve the resources.

13. The method of claim 12, wherein the MSC indicates to the base station controller (B) when resources have been reserved.

14. The method of claim 13, wherein the base station controller (B) instructs the mobile terminal to register with said target UMTS cell.

15. Apparatus for controlling handover of a mobile terminal (A) in a mobile telecommunications network from GSM radio coverage to UMTS radio coverage, the apparatus including means operable to generate a command in the packet switched domain for a packet data control unit (B) associated with a base station control unit (E) with which the mobile terminal (A) is registered for causing a radio resource manager function (D) in the base station control unit (B) to initiate handover from GSM radio coverage to UMTS radio coverage, **characterised in that** the radio resource manager function (D) is operable to cause initiation of a circuit switched domain handover procedure.

16. The apparatus of claim 15, wherein the command is generated by a serving GPRS support node, SGSN.

17. The apparatus of claim 16, wherein a home location register, HLR,
of the mobile telecommunications network passes information to the SGSN to trigger the SGSN to generate the command to the packet data control unit (B).

18. The apparatus of claim 17, wherein the HLR stores subscription data corresponding to the mobile terminal (A), and wherein the command to the packet data control unit (B) is generated in dependence upon that subscription information.

19. The apparatus of claim 15, 16,17,or 18, wherein a gateway GPRS support node, GGSN, in the mobile telecommunications network causes generation of the command to the packet data control unit (B).

20. The apparatus of claim 19, wherein the GGSN generates a signal for controlling the SGSN.

21. The apparatus of any one of claims 15 to 20, wherein the command generating means is responsive to downlink packet data being received for transmission to the mobile terminal (A).

22. The apparatus of claim 21, wherein the downlink data has a PDP context associated therewith, and wherein the SGSN is operable to analyse the PDP context to determine the communication speed and/or quality required by the PDP context and to selectively generating the command to the packet data control unit in dependence upon that analysis.

23. The apparatus of any one of claims 15 to 22, wherein the mobile terminal (A) is operable to request activation of a PDP context, and wherein this PDP context is analysed and the command to the packet data control unit (B) is selectively generated in dependence upon that analysis.

24. The apparatus of any one of claims 15 to 23, wherein the packet control data unit (B) is operable to detect a request for data to be sent to the mobile terminal (A) in the packet switched domain, determines whether the mobile terminal (A) is already operative in the circuit switch domain, and selectively generate the command in dependence thereon.

25. The apparatus of any one of claims 15 to 24, wherein the radio resource manager function (D)is operable to control a mobile switching centre, MSC, to control reservation of resources in a target UMTS cell.

26. The apparatus of claim 25, wherein the MSC is operable to instruct a radio network controller, RNC, (C) to reserve the resources.

27. The apparatus of claim 26, wherein the MSC indicates to the base station controller (B) when resources have been reserved.

28. The apparatus of claim 27, wherein the base station controller (E) is operable to instruct the mobile terminal (A) to register with said target UMTS cell.

## Patentansprüche

1. Verfahren zum Steuern einer Übergabe eines mobilen Endgeräts (A) in einem mobilen Telekommunikationsnetz von GSM-Funkversorgung auf UMTS-Funkversorgung, wobei das Verfahren das Erzeugen eines Befehls in der paketgeschalteten Domäne für eine Paketdatensteuereinheit (B) beinhaltet, die mit einer Basisstationssteuereinheit (E) assoziiert ist, bei der das mobile Endgerät (A) registriert ist, der bewirkt, dass eine Funkressourcenmanager-Funktion (D) in der Basisstationsteuereinheit (E) eine Übergabe von GSM-Funkversorgung auf UMTS-Funkversorgung einleitet, **dadurch gekennzeichnet, dass** die von der Funkressourcenmanager-Funktion (D) eingeleitete Übergabe eine Übergabeprozedur in der leitungsgeschalteten Domäne ist.

2. Verfahren nach Anspruch 1, wobei der Befehl mit einem bedienenden GPRS-Support-Knoten, SGSN, erzeugt wird.

3. Verfahren nach Anspruch 2, wobei ein Heimatregister, HLR (Home Location Register), des mobilen Telekommunikationsnetzes Informationen zum SGSN leitet, um das SGSN zum Erzeugen des Befehls zu der Paketdatensteuereinheit (B) zu aktivieren.

4. Verfahren nach Anspruch 3, wobei das HLR Abonnentendaten speichert, die dem mobilen Endgerät (A) entsprechen, und wobei der Befehl an die Paketdatensteuereinheit (B) in Abhängigkeit von diesen Abonnenteninformationen erzeugt wird.

5. Verfahren nach einem der vorherigen Ansprüche, wobei ein Gateway-GPRS-Support-Knoten, GGSN, im mobilen Telekommunikationsnetz die Erzeugung eines Befehls an die Paketdatensteuereinheit (B) bewirkt.

6. Verfahren nach Anspruch 5, wobei das GGSN ein Signal zum Steuern des SGSN erzeugt.

7. Verfahren nach einem der vorherigen Ansprüche, wobei der Befehl an die Paketdatensteuereinheit (B) als Reaktion darauf erzeugt wird, dass Downlink-Paketdaten zur Übertragung zum mobilen Endgerät (A) empfangen werden.

8. Verfahren nach Anspruch 7, wobei mit den Downlink-Daten ein PDP-Kontext assoziiert ist und wobei das Verfahren das Analysieren des PDP-Kontexts zum Ermitteln der vom PDP-Kontext benötigten Kommunikationsgeschwindigkeit und/oder -qualität und zum selektiven Erzeugen des Befehls an die Paketdatensteuereinheit (B) in Abhängigkeit davon beinhaltet.

9. Verfahren nach einem der vorherigen Ansprüche, wobei das mobile Endgerät (A) eine Aktivierung eines PDP-Kontexts anfordert und wobei dieser PDP-Kontext analysiert und der Befehl an die Paketdatensteuereinheit in Abhängigkeit von dieser Analyse selektiv erzeugt wird.

10. Verfahren nach einem der vorherigen Ansprüche, wobei die Paketdatensteuereinheit (B) eine Anforderung von Daten erkennt, die zu dem mobilen Endgerät (A) in der paketgeschalteten Domäne gesendet werden sollen, ermittelt, ob das mobile Endgerät (A) bereits in der leitungsgeschalteten Domäne operativ ist, und den Befehl in Abhängigkeit davon selektiv erzeugt.

11. Verfahren nach einem der vorherigen Ansprüche, wobei die Funkressourcenmanager-Funktion (D) eine Mobilvermittlungsstelle, MSC, anweist, eine Reservierung von Ressourcen in einer Ziel-UMTS-Zelle zu steuern.

12. Verfahren nach Anspruch 11, wobei die MSC eine Funknetzsteuerung, RNC, anweist, die Ressourcen zu reservieren.

13. Verfahren nach Anspruch 12, wobei die MSC der Basisstationssteuerung (B) anzeigt, wenn Ressourcen reserviert wurden.

14. Verfahren nach Anspruch 13, wobei die Basisstationssteuerung (B) das mobile Endgerät anweist, sich bei der genannten Ziel-UMTS-Zelle zu registrieren.

15. Vorrichtung zum Steuern der Übergabe eines mobilen Endgeräts (A) in einem mobilen Telekommunikationsnetz von GSM-Funkversorgung zu UMTS-Funkversorgung, wobei die Vorrichtung Mittel beinhaltet, um einen Befehl in der paketgeschalteten Domäne für eine Paketdatensteuereinheit (B) zu erzeugen, die mit einer Basisstationssteuereinheit (E) assoziiert ist, bei der das mobile Endgerät (A) registriert ist, um zu bewirken, dass eine Funkressourcenmanager-Funktion (D) in der Basisstationssteuereinheit (B) eine Übergabe von GSM-Funkversorgung zu UMTS-Funkversorgung einleitet, **dadurch gekennzeichnet, dass** die Funkressourcenmanager-Funktion (D) eine Einleitung einer Übergabeprozedur in der leitungsgeschalteten Domäne bewirkt.

16. Vorrichtung nach Anspruch 15, wobei der Befehl von einem bedienenden GPRS-Support-Knoten, SGSN, erzeugt wird.

17. Vorrichtung nach Anspruch 16, wobei ein Heimatregister, HLR (Home Location Register), des mobilen Telekommunikationsnetzes Informationen zum SGSN leitet, um das SGSN zum Erzeugen des Befehls an die Paketdatensteuereinheit (B) zu aktivieren.

18. Vorrichtung nach Anspruch 17, wobei das HLR Abonnentendaten speichert, die dem mobilen Endgerät (A) entsprechen, und wobei der Befehl an die Paketdatensteuereinheit (B) in Abhängigkeit von dieser Abonnenteninformation erzeugt wird.

19. Vorrichtung nach Anspruch 15, 16, 17 oder 18, wobei ein Gateway-GPRS-Support-Knoten, GGSN, im mobilen Telekommunikationsnetz die Erzeugung des Befehls an die Paketdatensteuereinheit (B) bewirkt.

20. Vorrichtung nach Anspruch 19, wobei das GGSN ein Signal zum Steuern des SGSN erzeugt.

21. Vorrichtung nach einem der Ansprüche 15 bis 20, wobei das Befehlserzeugungsmittel auf den Empfang von Downlink-Paketdaten zur Übertragung zum mobilen Endgerät (A) anspricht.

22. Vorrichtung nach Anspruch 21, wobei mit den Downlink-Daten ein PDP-Kontext assoziiert ist und wobei das SGSN die Aufgabe hat, den PDP-Kontext zu analysieren, um die vom PDP-Kontext benötigte Kommunikationsgeschwindigkeit und/oder -qualität zu ermitteln und den Befehl an die Paketdatensteuereinheit in Abhängigkeit von dieser Analyse selektiv zu erzeugen.

23. Vorrichtung nach einem der Ansprüche 15 bis 22, wobei das mobile Endgerät (A) die Aufgabe hat, die Aktivierung eines PDP-Kontexts anzufordern, und wobei dieser PDP-Kontext analysiert wird und der Befehl an die Paketdatensteuereinheit (B) in Abhängigkeit von dieser Analyse selektiv erzeugt wird.

24. Vorrichtung nach einem der Ansprüche 15 bis 23, wobei die Paketdatensteuereinheit (B) die Aufgabe hat, eine Anforderung von Daten zu erkennen, die zu dem mobilen Endgerät (A) in der paketgeschalteten Domäne gesendet werden sollen, ermittelt, ob das mobile Endgerät (A) bereits in der leitungsgeschalteten Domäne operativ ist, und den Befehl in Abhängigkeit davon selektiv erzeugt.

25. Vorrichtung nach einem der Ansprüche 15 bis 24, wobei die Funkressourcenmanager-Funktion (D) die Aufgabe hat, eine Mobilvermittlungsstelle MSC zu steuern, um die Reservierung von Ressourcen in einer Ziel-UMTS-Zelle zu steuern.

26. Vorrichtung nach Anspruch 25, wobei die MSC die Aufgabe hat, eine Funknetzsteuerung, RNC, (C) zum Reservieren der Ressourcen anzuweisen.

27. Vorrichtung nach Anspruch 26, wobei die MSC der Basisstationssteuerung (B) anzeigt, wenn Ressourcen reserviert wurden.

28. Vorrichtung nach Anspruch 27, wobei die Basisstationssteuerung (E) die Aufgabe hat, das mobile Endgerät (A) anzuweisen, sich bei der genannten Ziel-UMTS-Zelle zu registrieren.

## Revendications

1. Procédé de commande du transfert d'appel d'un terminal mobile (A) dans un réseau de télécommunications mobiles depuis une couverture radio GSM vers une couverture radio UMTS, le procédé englobant l'opération consistant à générer une instruction dans le domaine à commutation de paquets pour une unité de commande de données en paquets (B) associée à une unité de commande de station de base (E) auprès de laquelle le terminal mobile (A) est enregistré, qui oblige une fonction gestionnaire des ressources radio (D) située dans l'unité de commande de station de base (E) à amorcer un transfert d'appel depuis une couverture radio GSM vers une couverture radio UMTS, **caractérisé en ce que** le transfert d'appel amorcé par la fonction gestionnaire des ressources radio (D) est une procédure de transfert d'appel du domaine à commutation de circuits.

2. Procédé selon la revendication 1, l'instruction étant générée par un noeud de support GPRS de desserte, SGSN.

3. Procédé selon la revendication 2, un registre des positions de rattachement, HLR, du réseau de télécommunications mobiles acheminant des informations au SGSN afin de déclencher le SGSN pour qu'il génère l'instruction destinée à l'unité de commande de données en paquets (B).

4. Procédé selon la revendication 3, le HLR stockant des données d'abonnement lesquelles correspondent au terminal mobile (A), et l'instruction destinée à l'unité de commande de données en paquets (B) étant générée en fonction de ces informations d'abonnement.

5. Procédé selon l'une quelconque des revendications précédentes, un noeud de support GPRS de transit, GGSN, dans le réseau de télécommunications mobiles provoquant la génération de l'instruction destinée à l'unité de commande de données en paquets (B).

6. Procédé selon la revendication 5, le GGSN générant un signal pour assurer la commande du SGSN.

7. Procédé selon l'une quelconque des revendications précédentes, l'instruction destinée à l'unité de commande de données en paquets (B) étant générée en réaction à la réception de données en paquets en liaison descendante en vue d'une transmission vers le terminal mobile (A).

8. Procédé selon la revendication 7, les données en liaison descendante possédant un contexte PDP qui leur est associé, et cas dans lequel le procédé englobe les opérations consistant à analyser le contexte PDP afin de déterminer la vitesse et/ou la qualité des communications requises par le contexte PDP et à générer sélectivement l'instruction destinée à l'unité de commande de données en paquets (B) en fonction de cela.

9. Procédé selon l'une quelconque des revendications précédentes, le terminal mobile (A) demandant l'activation d'un contexte PDP, et cas dans lequel ce contexte PDP est analysé et l'instruction destinée à l'unité de commande de données en paquets est générée sélectivement en fonction de cette analyse.

10. Procédé selon l'une quelconque des revendications précédentes, l'unité de commande de données en paquets (B) détectant une demande pour que des données soient envoyées au terminal mobile (A) dans le domaine à commutation de paquets, déterminant si le terminal mobile (A) est déjà opérationnel ou non dans le domaine à commutation de circuits, et générant sélectivement l'instruction en fonction de cela.

11. Procédé selon l'une quelconque des revendications précédentes, la fonction gestionnaire des ressources radio (D) ordonnant à un centre de commutation mobile, MSC, de piloter la réservation de ressources dans une cellule UMTS cible.

12. Procédé selon la revendication 11, le MSC ordonnant à un contrôleur de réseau radio, RNC, de réserver les ressources.

13. Procédé selon la revendication 12, le MSC indiquant au contrôleur de station de base (B) le moment auquel des ressources ont été réservées.

14. Procédé selon la revendication 13, le contrôleur de station de base (B) ordonnant au terminal mobile (A) de s'enregistrer auprès de ladite cellule UMTS cible.

15. Appareil permettant de commander un transfert d'appel d'un terminal mobile (A) dans un réseau de télécommunications mobiles depuis une couverture radio GSM vers une couverture radio UMTS, l'appareil comportant des moyens exploitables de façon à générer une instruction dans le domaine à commutation de paquets pour une unité de commande de données en paquets (B) associée à une unité de commande de station de base (E) auprès de laquelle le terminal mobile (A) est enregistré afin d'obliger une fonction gestionnaire des ressources radio (D) située dans l'unité de commande de station de base (B) à amorcer un transfert d'appel depuis une couverture radio GSM vers une couverture radio UMTS, **caractérisé en ce que** la fonction gestionnaire des ressources radio (D) est exploitable de façon à provoquer l'amorçage d'une procédure de transfert d'appel du domaine à commutation de circuits.

16. Appareil selon la revendication 15, l'instruction étant générée par un noeud de support GPRS de desserte, SGSN.

17. Appareil selon la revendication 16, un registre des positions de rattachement, HLR, du réseau de télécommunications mobiles acheminant des informations au SGSN afin de déclencher le SGSN pour qu'il génère l'instruction destinée à l'unité de commande de données en paquets (B).

18. Appareil selon la revendication 17, le HLR stockant des données d'abonnement lesquelles correspondent au terminal mobile (A), et l'instruction destinée à l'unité de commande de données en paquets (B) étant générée en fonction de ces informations d'abonnement.

19. Appareil selon la revendication 15, 16, 17 ou 18, un noeud de support GPRS de transit, GGSN, dans le réseau de télécommunications mobiles provoquant la génération de l'instruction destinée à l'unité de commande de données en paquets (B).

20. Appareil selon la revendication 19, le GGSN générant un signal pour assurer la commande du SGSN.

21. Appareil selon l'une quelconque des revendications 15 à 20, les moyens de génération d'instructions réagissant à la réception de données en paquets en liaison descendante en vue d'une transmission vers le terminal mobile (A).

22. Appareil selon la revendication 21, les données en liaison descendante possédant un contexte PDP qui leur est associé, et cas dans lequel le SGSN est exploitable de façon à analyser le contexte PDP afin de déterminer la vitesse et/ou la qualité des communications requises par le contexte PDP et à générer sélectivement l'instruction destinée à l'unité de commande de données en paquets en fonction de cette analyse.

23. Appareil selon l'une quelconque des revendications 15 à 22, le terminal mobile (A) étant exploitable de façon à demander l'activation d'un contexte PDP, et cas dans lequel ce contexte PDP est analysé et l'instruction destinée à l'unité de commande de données en paquets (B) est générée sélectivement en fonction de cette analyse.

24. Appareil selon l'une quelconque des revendications 15 à 23, l'unité de commande de données en paquets (B) étant exploitable de façon à détecter une demande pour que des données soient envoyées au terminal mobile (A) dans le domaine à commutation de paquets, à déterminer si le terminal mobile (A) est déjà opérationnel ou non dans le domaine à commutation de circuits, et à générer sélectivement l'instruction en fonction de cela.

25. Appareil selon l'une quelconque des revendications 15 à 24, la fonction gestionnaire des ressources radio (D) étant exploitable de façon à commander un centre de commutation mobile, MSC, afin de piloter les ressources de réservation dans une cellule UMTS cible.

26. Appareil selon la revendication 25, le MSC étant exploitable de façon à ordonner à un contrôleur de réseau radio, RNC, (C) de réserver les ressources.

27. Appareil selon la revendication 26, le MSC indiquant au contrôleur de station de base (B) le moment auquel des ressources ont été réservées.

28. Appareil selon la revendication 27, le contrôleur de station de base (B) étant exploitable de façon à ordonner au terminal mobile (A) de s'enregistrer auprès de ladite cellule UMTS cible.
